# EUROPÄISCHE PATENTSCHRIFT

(11) **EP 1 903 716 B1**
(45) Veröffentlichungstag und Bekanntmachung des Hinweises auf die Patenterteilung: **19.06.2013**
(21) Anmeldenummer: 06019816.5
(22) Anmeldetag: 21.09.2006
(51) Int. Cl.: H04L 12/24

(54) **Selektive Detaildarstellung von Geräten an einem Netzwerk**
Selective detailed representation of devices on a network
Représentation détaillée et sélective d'appareils en réseau

(43) Veröffentlichungstag der Anmeldung: 26.03.2008
(73) Patentinhaber: Siemens Aktiengesellschaft, 80333 München (DE)
(72) Erfinder: Eichner, Ingo, 91413 Neustadt/Aisch (DE)

(56) Entgegenhaltungen:
- EP-A1- 1 398 905
- US-A- 5 821 937
- US-A- 5 971 581
- US-A1- 2002 113 816
- CISCCO SYSTEMS: "GETTING STARTED WITH CISCO NETWORK ASSISTANT" CISCO SYSTEMS, [Online] 1. Januar 2005 (2005-01-01), XP002432063 San Jose, California Gefunden im Internet: URL:http://www.cisco.com/univercd/cc/td/do c/product/rtrmgmt/cna/v3_0/gsg/cnags_3.pdf > [gefunden am 2007-05-02]

## Beschreibung

Die Erfindung betrifft ein Verfahren, ein Programm sowie ein System zur graphischen Darstellung und Projektierung zumindest eines Netzwerkes von Geräten eines Automatisierungssystems.

Ein derartiges Verfahren bzw. Programm oder System kommt bei der graphischen Darstellung und Projektierung von großen Netzwerken im Automatisierungsumfeld zum Einsatz, wo es im Regelfall zu einer hohen Informationsdichte an der Benutzeroberfläche kommt. Hohe Informationsdichten sind von einem Anwender bzw. Benutzer nur schwer zu erfassen, d.h. es besteht die Notwendigkeit, diese niedrig zu halten (zentraler Usability-Ansatz). Eine häufige Hauptanforderung besteht darin, dem Anwender eine große Menge an Überblicksinformation zu präsentieren. Konkret heißt das, es muss möglich sein, ein oder mehrere große Netzwerke (viele Geräte, viele Netze) übersichtlich darzustellen und dem Anwender interaktiv zugänglich zu machen.

Der Anwender soll die Geräte graphisch miteinander verbinden bzw. sie zu bestehenden Netzwerken hinzufügen oder davon entfernen. Dazu wird er z.B. mit einer Maus auf eine Netzschnittstelle eines Gerätes klicken, den Mauszeiger zu einem existierenden Netzliniensegment oder zu einer Netzschnittstelle eines anderen Gerätes ziehen und dort wiederum klicken. Um dem Benutzer eine ausreichend große Fläche für die Interaktion mit der Maus zu geben, müssen die Netzschnittstellen im Verhältnis zu den äußeren Proportionen der Geräte deutlich größer dargestellt werden, als sie an Fläche auf den realen Geräten einnehmen. Das Problem dabei ist, dass es bei Geräten mit mehreren Netzschnittstellen daher vorkommen kann, dass nicht mehr alle Netzschnittstellen dargestellt werden können, da die äußeren Abmaße der Geräte (und damit die zur Verfügung stehende Grundfläche für die Netzschnittstellen) in einer Ansicht, die einem Anwender eine große Menge an Überblicksinformation bietet, zu klein ist.

Aus der Druckschrift "Cisco Systems: Getting Started with Cisco Network Assistant" ist ein Programm zur grafischen Darstellung eines Datenverarbeitungsnetzwerkes bekannt, bei dem für die Darstellung eines Netzwerkes zwischen einer Topologie-Sicht und einer Detail-Ansicht gewechselt werden kann, wobei auch beide Sichten in getrennten, nebeneinander angeordneten Bildschirmfenstern angezeigt werden können. Dabei zeigt die Topologie-Sicht schematisch die Verbindungen zwischen verschiedenen Netzwerkkomponenten, wogegen die Detail-Ansicht eine realitätsgetreue Abbildung einzelner Netzwerkkomponenten bietet.

Der Erfindung liegt die Aufgabe zugrunde, ein Verfahren, ein Programm sowie ein System vorzuschlagen, dass einem Benutzer neben einer großen Menge an Überblicksinformation eine selektive Detaildarstellung von Geräten in einem Netzwerk ermöglicht.

Diese Aufgabe wird gelöst durch ein Verfahren zur graphischen Darstellung und Projektierung zumindest eines Netzwerkes von Geräten eines Automatisierungssystems, die je zumindest eine Netzschnittstelle aufweisen,
- wobei das zumindest eine Netzwerk in einer Überblickssicht dargestellt wird, in der das Netzwerk mit den Geräten und mit Netzlinien schematisch dargestellt wird und in der Verbindungen zwischen den Geräten untereinander und mit den Netzlinien durch Verbindungslinien, die an einem mit einer Netzlinie verbundenen Ende mit einer Markierung versehen werden, dargestellt werden,
- wobei in einem ersten Schritt durch einen Benutzer zumindest ein Gerät zur Darstellung in einer Detailsicht ausgewählt wird und
- wobei in einem zweiten Schritt die Darstellung der Detailsicht, in der alle Netzschnittstellen des jeweiligen Gerätes dargestellt werden, für die ausgewählten Geräte vom Benutzer aktiviert wird.

Diese Aufgabe wird ferner'gelöst durch ein Programm bzw. System mit den in Anspruch 10 bzw. 19 angegebenen Merkmalen.

Der Anwender kann also ein Gerät, auf dessen aktuell nicht sichtbare Details (z.B. die Netzschnittstellen) er zugreifen will, selektieren und durch eine weitere Interaktion mit dem System über eine definierte Taste, einen Maus-Klick oder - Doppelklick auf das Gerät bzw. auf ein Steuerelement oder durch eine Kombination von Benutzerhantierungen mit den Eingabegeräten das System veranlassen, das Erscheinungsbild des Gerätes von einer wenig detailreichen Darstellung zu einer sehr detailreichen Darstellung zu ändern. Dieses gilt für beliebig viele Geräte, die gleichzeitig detailliert dargestellt werden können. Vorteil dieser Erfindung ist es, dass sich die Netzschnittstellen auch von den Geräten anzeigen lassen, die aufgrund der oben dargestellten Problematik in der Überblickssicht nicht dargestellt werden können, ohne dass der Anwender dazu gezwungen wird, in eine andere, detailorientierte Sicht wechseln zu müssen. Die Darstellung der Netzschnittstellen ist dabei natürlich eine Grundvoraussetzung für einen interaktiven Zugriff des Anwenders und damit für die Projektierung des Netzwerkes.

In einer vorteilhaften Form der Ausgestaltung wird durch einen Benutzer zumindest ein in Detailsicht dargestelltes Gerät ausgewählt und die Darstellung der Detailsicht für die in Detailsicht dargestellten und ausgewählten Geräte vom Benutzer deaktiviert. Da Geräte mit vielen Netzschnittstellen in der Detailsicht wesentlich größer dargestellt werden, kann es hierbei passieren, dass Geräte und Netzlinien in der Umgebung des nun vergrößert dargestellten Gerätes von diesem verdeckt werden. Somit ist es erforderlich, dass die Detailsicht auch wieder deaktivierbar ist. Die Deaktivierung kann in einer anderen Ausführungsform beispielsweise automatisch nach fünf Sekunden ohne eine Interaktion des Anwenders erfolgen. Der Vorteil dieser Ausgestaltungsform liegt darin, dass der Benutzer gezielt die Geräte selektieren kann, die er nicht länger in der Detailsicht benötigt.

In einer weiteren vorteilhaften Ausführungsform sind Geräte von einem Benutzer zum Netzwerk hinzufügbar und entfernbar. Damit sind bestehende Netzwerke erweiter- und verkleinerbar, d.h. können problemlos an sich geänderte Gegebenheiten angepasst werden.

In einer weiteren vorteilhaften Ausführungsform sind Verbindungen zwischen Geräten untereinander und mit Netzlinien von einem Benutzer zum Netzwerk hinzufügbar und entfernbar. Hierzu wird er beispielsweise mit der Maus auf eine Netzschnittstelle eines Gerätes klicken, den Mauszeiger zu einem existierenden Netzliniensegment oder zu einer Netzschnittstelle eines anderen Gerätes ziehen und dort wiederum klicken. Auch dieses dient der Anpassung eines Netzwerkes und ist somit für ein umfassendes Projektierungstool unerlässlich.

In einer weiteren vorteilhaften Ausführungsform wird bei Aktivierung bzw. Deaktivierung der Detailsicht für zumindest ein ausgewähltes Gerät in einer Übergangsphase zumindest eine Zwischensicht des jeweiligen Gerätes dargestellt. Dabei kann auch bei mehreren Zwischensichten der Eindruck eines animierten Übergangs erzeugt werden. Durch diese Änderung des Erscheinungsbildes des Gerätes in einer für den Anwender zeitlich erlebbaren Übergangsphase wird dem Anwender der Übergang von der Überblickssicht in die Detailsicht bzw. umgekehrt deutlicher und er kann auch besser erkennen, dass vormals sichtbare Bereiche unter Umständen überdeckt werden.

In einer weiteren vorteilhaften Ausführungsform werden dabei Eingaben durch den Benutzer während der Übergangsphase ignoriert. Der Anwender kann somit nicht mit dem System interagieren, d.h. alle Anwenderaktionen sind gesperrt. Hierdurch werden mögliche Verwirrungen des Systems durch beispielsweise Fehleingabe des Benutzers wie Mehrfachklicks auf ein zu zoomendes Gerät vermieden.

In einer weiteren vorteilhaften Ausführungsform wird die Darstellung der Geräte bezüglich ihrer Farbgebung, Form und/oder relativen Größe zueinander den realen Geräten entsprechend gestaltet. Dieses dient der Identifikation und Wiedererkennung der Geräte durch den Anwender, d.h. ein Anwender sollte die dargestellten Geräte als die wieder erkennen können, die er in der realen Anlage vorfindet. Beispielsweise bedeutet das, dass Geräte, die physikalisch in Form eines Würfels vorliegen, als Quadrat dargestellt werden. Geräte, die hoch und schmal sind, werden auch hoch und schmal dargestellt. Ebenso sollen die physikalischen Größen der Geräte berücksichtigt werden, d.h. Geräte, die groß sind, werden größer dargestellt als Geräte, die im Vergleich dazu klein sind.

In einer weiteren vorteilhaften Ausführungsform wird den Geräten eine Wertzahl zugeordnet und die Geräte werden in der Überblickssicht in Abhängigkeit von der Wertzahl unterschiedlich hervorgehoben dargestellt. Somit kann die Darstellung dem Anwender auch schon die unterschiedliche Wichtigkeit der einzelnen Geräte graphisch präsentieren. Geräte, die die eigentliche Signalverarbeitung durchführen (z.B. eine zentrale CPU), sind "wichtiger" als Geräte, die Signale weiterleiten (z.B. Switches) oder vom Sensor einlesen bzw. am Aktor ausgeben (z.B. dezentrale Slave-Baugruppen eines Profibus-Netzes). Daher werden die "wichtigeren" Geräte gegenüber den weniger "wichtigen" Geräten stärker hervorgehoben dargestellt. Dies kann beispielsweise durch eine größere Farbsättigung oder verstärkten Konturen erfolgen, oder aber auch durch eine überproportional große Darstellung. Im letzteren Fall wird die Wichtigkeit gegenüber der Anforderung einer Darstellung entsprechend der relativen Größe und der Präsentation einer großen Menge von Überblicksinformation vom System aufgewogen und für die Berechnung der Größe der darzustellenden Geräte ausgewertet.

In einer weiteren vorteilhaften Ausführungsform werden dabei die Geräte in der Detailsicht in Abhängigkeit von der Wertzahl unterschiedlich hervorgehoben dargestellt. Somit können auch in dieser Ansicht auf einen Blick die wichtigeren von den unwichtigeren Geräten unterschieden werden.

Im Folgenden wird die Erfindung anhand des in den Figur dargestellten Ausführungsbeispiels näher beschrieben und erläutert. Es zeigt:

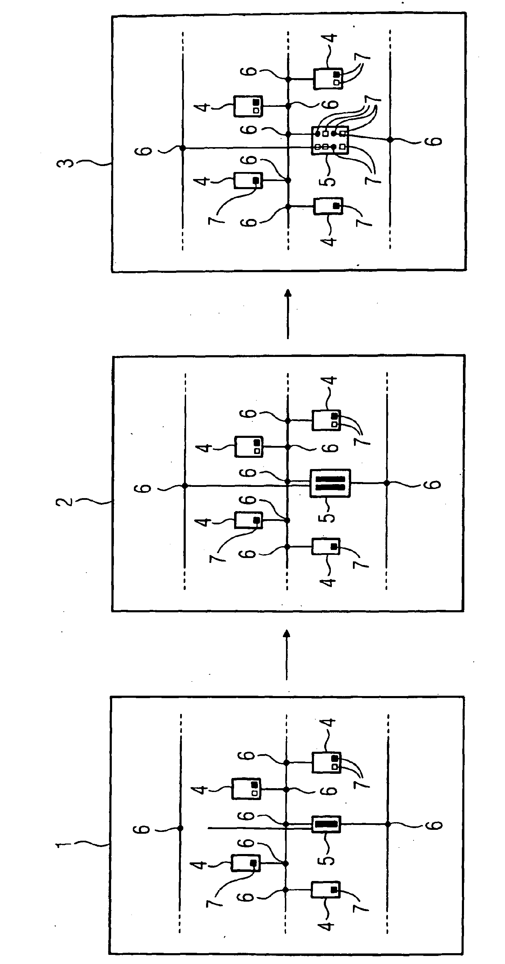

- FIG 1: einen Übergang von einer Überblickssicht zu einer Detailsicht eines Gerätes in einem Netzwerk.

Fig 1 zeigt im linken Teil in einer Überblickssicht 1 ein Netzwerk von Geräten 4, 5 eines Automatisierungssystems, die je zumindest eine Netzschnittstelle 7 aufweisen. Die Geräte 4, 5 sind mit den Netzlinien durch Verbindungslinien verbunden, die an dem mit der Netzlinie verbundenen Ende mit einer Markierung 6 versehen sind. Bei den Geräten 4 sind die Netzschnittstellen 7 bereits in der Überblickssicht 1 zu erkennen. Gerät 5 weist hingegen mehr Netzschnittstellen 7 auf als in dieser Ansicht 1 dargestellt werden können. Gerät 5 ist daher von einem Benutzer zur Vergrößerung selektiert worden. Nach Aktivierung der Darstellung der Detailsicht 3 des ausgewählten Gerätes 5 wird eine Zwischensicht in einer Übergangsphase 2 angezeigt. In der detailreichen Darstellung 3 wird das Gerät 5 deutlich größer präsentiert, als es aufgrund seiner "Wichtigkeit" und seiner physikalischen Größe in der Darstellung 1 dargestellt wurde. Das hat zur Konsequenz, dass unter Umständen graphische Elemente wie benachbarte Geräte 4 oder Netzlinien vom detailliert dargestellten Gerät 5 überdeckt werden. Das Gerät 5 kann also frei verschoben werden, ohne dass die übrigen Elemente der Darstellung davon betroffen werden, d.h. sie verbleiben bei ihren graphischen Positionen. Der Anwender kann auf die nun zugänglichen Details (konkret: die Netzschnittstellen 7) des Gerätes 5 zugreifen und alle zulässigen Hantierungen wie z.B. eine Änderung einer Zuordnung einer Netzschnittstelle 7 zu einem Netz durchführen.

Zusammenfassend betrifft die Erfindung ein Verfahren, ein Programm sowie ein System zur graphischen Darstellung und Projektierung zumindest eines Netzwerkes von Geräten eines Automatisierungssystems, wobei es im Regelfall zu einer hohen Informationsdichte an der Benutzeroberfläche kommt. Um einem Benutzer neben einer großen Menge an Überblicksinformation eine selektive Detaildarstellung von Geräten in einem Netzwerk zu ermöglichen, wird eine Lösung vorgeschlagen, bei der ein Benutzer in der Überblickssicht einzelne Geräte detaillierter darstellen kann. Der Anwender kann also ein Gerät, auf dessen aktuell nicht sichtbare Details (z.B. die Netzschnittstellen) er zugreifen will, selektieren und durch eine weitere Interaktion das Erscheinungsbild des Gerätes von einer wenig detailreichen Darstellung zu einer sehr detailreichen Darstellung ändern. Dieses gilt für beliebig viele Geräte, die gleichzeitig detailliert dargestellt werden können. Vorteil dieser Erfindung ist es, dass sich die Netzschnittstellen auch von den Geräten anzeigen lassen, die in der Überblickssicht nicht mit allen Netzschnittstellen dargestellt werden können, ohne dass der Anwender dazu gezwungen wird, in eine andere, detailorientierte Sicht wechseln zu müssen.

## Patentansprüche

1. Verfahren zur graphischen Darstellung und Projektierung zumindest eines Netzwerkes von Geräten (4, 5) eines Automatisierungssystems, die je zumindest eine Netzschnittstelle (7) aufweisen,
- wobei das zumindest eine Netzwerk in einer Überblickssicht (1) dargestellt wird, in der das Netzwerk mit den Geräten (4, 5) und mit Netzlinien schematisch dargestellt wird und in der Verbindungen zwischen den Geräten (4, 5) untereinander und mit den Netzlinien durch Verbindungslinien, die an einem mit einer Netzlinie verbundenen Ende mit einer Markierung (6) versehen werden, dargestellt werden, und
- wobei in einem ersten Schritt durch einen Benutzer zumindest ein Gerät (5) zur Darstellung in einer Detailsicht (3) ausgewählt wird,
**dadurch gekennzeichnet, dass**
- in einem zweiten Schritt die Darstellung der Detailsicht (3) innerhalb der Überblickssicht (1), in der alle Netzschnittstellen (7) des jeweiligen Gerätes (5) dargestellt werden, für die ausgewählten Geräte (5) vom Benutzer aktiviert wird, wobei sich das Erscheinungsbild der ausgewählten Geräte innerhalb der Überblickssicht in eine Detailsicht umwandelt, wodurch Verbindungen zwischen den Geräten zum Netzwerk hinzufügbar und entfernbar sind.

2. Verfahren nach Anspruch 1,
wobei durch einen Benutzer zumindest ein in Detailsicht (3) dargestelltes Gerät (5) ausgewählt wird und wobei die Darstellung der Detailsicht (3) für die in Detailsicht dargestellten und ausgewählten Geräte (5) vom Benutzer deaktiviert wird.

3. Verfahren nach Anspruch 1 oder 2,
wobei Geräte (4, 5) von einem Benutzer zum Netzwerk hinzugefügt und/oder entfernt werden.

4. Verfahren nach einem der vorhergehenden Ansprüche,
wobei Verbindungen zwischen Geräten (4, 5) untereinander und mit Netzlinien von einem Benutzer zum Netzwerk hinzugefügt und/oder entfernt werden.

5. Verfahren nach einem der vorhergehenden Ansprüche,
wobei bei Aktivierung bzw. Deaktivierung der Detailsicht (3) für zumindest ein ausgewähltes Gerät (5) in einer Übergangsphase (2) zumindest eine Zwischensicht des jeweiligen Gerätes (5) dargestellt wird.

6. Verfahren nach Anspruch 5,
wobei Eingaben durch den Benutzer während der Übergangsphase (2) ignoriert werden.

7. Verfahren nach einem der vorhergehenden Ansprüche,
wobei die Darstellung der Geräte (4, 5) bezüglich ihrer Farbgebung, Form und/oder relativen Größe zueinander den realen Geräten entsprechend gestaltet wird.

8. Verfahren nach einem der vorhergehenden Ansprüche,
wobei den Geräten (4, 5) eine Wertzahl zugeordnet wird und die Geräte (4, 5) in der Überblickssicht (1) in Abhängigkeit von der Wertzahl unterschiedlich hervorgehoben dargestellt werden.

9. Verfahren nach Anspruch 8,
wobei die Geräte (4, 5) in der Detailsicht (3) in Abhängigkeit von der Wertzahl unterschiedlich hervorgehoben dargestellt werden.

10. Programm, das, wenn es auf einem System zur graphischen Darstellung und Projektierung zumindest eines Netzwerkes von Geräten (4, 5) eines Automatisierungssystems, die je zumindest eine Netzschnittstelle (7) aufweisen, ausgeführt wird, das System dazu veranlasst,
- das zumindest eine Netzwerk in einer Überblickssicht (1) darzustellen, in der das Netzwerk mit den Geräten (4, 5) und mit Netzlinien schematisch dargestellt wird und in der Verbindungen zwischen den Geräten (4, 5) untereinander und mit den Netzlinien durch Verbindungslinien, die an einem mit einer Netzlinie verbundenen Ende mit einer Markierung (6) versehen werden, dargestellt werden, und
- wobei in einem ersten Schritt durch einen Benutzer zumindest ein Gerät (5) zur Darstellung in einer Detailsicht (3) auswählbar ist,
**dadurch gekennzeichnet, dass**
- in einem zweiten Schritt innerhalb der Überblickssicht (1) die Darstellung der Detailsicht (3), in der alle Netzschnittstellen (7) des jeweiligen Gerätes (5) dargestellt werden, für die ausgewählten Geräte (5) vom Benutzer aktivierbar ist, wobei sich das Erscheinungsbild der ausgewählten Geräte innerhalb der Überblickssicht in eine Detailsicht umwandelt, wodurch Verbindungen zwischen den Geräten zum Netzwerk hinzufügbär und entfernbar sind.

11. Programm nach Anspruch 10,
wobei durch einen Benutzer zumindest ein in Detailsicht (3) dargestelltes Gerät (5) auswählbar ist und wobei die Darstellung der Detailsicht (3) für die in Detailsicht (3) dargestellten und ausgewählten Geräte (5) vom Benutzer deaktivierbar ist.

12. Programm nach Anspruch 10 oder 11,
wobei Geräte (4, 5) von einem Benutzer zum Netzwerk hinzufügbar und entfernbar sind.

13. Programm nach einem der Ansprüche 10 bis 12,
wobei Verbindungen zwischen Geräten (4, 5) untereinander und mit Netzlinien von einem Benutzer zum Netzwerk hinzufügbar und entfernbar sind.

14. Programm nach einem der Ansprüche 10 bis 13,
wobei bei Aktivierung bzw. Deaktivierung der Detailsicht (3) für zumindest ein ausgewähltes Gerät (5) in einer Übergangsphase (2) zumindest eine Zwischensicht des jeweiligen Gerätes (5) darstellbar ist.

15. Programm nach Anspruch 14,
wobei Eingaben durch den Benutzer während der Übergangsphase (2) ignoriert werden.

16. Programm nach einem der Ansprüche 10 bis 15,
wobei die Darstellung der Geräte (4, 5) bezüglich ihrer Farbgebung, Form und/oder relativen Größe zueinander den realen Geräten entsprechend gestaltet ist.

17. Programm nach einem der Ansprüche 10 bis 16,
wobei den Geräten (4, 5) eine Wertzahl zuordbar ist und die Geräte (4, 5) in der Überblickssicht (1) in Abhängigkeit von der Wertzahl unterschiedlich hervorgehoben darstellbar sind.

18. Programm nach Anspruch 17,
wobei die Geräte (4, 5) in der Detailsicht (3) in Abhängigkeit von der Wertzahl unterschiedlich hervorgehoben darstellbar sind.

19. System zur graphischen Darstellung und Projektierung zumindest eines Netzwerkes von Geräten (4, 5) eines Automatisierungssystems mit zumindest einer Eingabeeinheit, mit zumindest einer Ausgabeeinheit und mit Mitteln zum Ausführen eines Programmes nach einem der Ansprüche 10 bis 18.

## Claims

1. Method for graphically displaying and engineering at least one network of devices (4, 5) of an automation system, which each comprise at least one network interface (7),
- wherein the at least one network is displayed in an overview (1) in which the network is schematically displayed with the devices (4, 5) and network lines, and in which connections between the devices (4, 5) and to the network lines by way of connecting lines, which are provided with a marking (6) at an end connected to a network line, are displayed,
- wherein at least one device (5) is selected by a user in a first step for display in a detailed view (3), and
**characterised in that**
- display of the detailed view (3) in an overview (1), in which all network interfaces (7) of the respective device (5) are displayed, is activated by the user for the selected devices (5) in a second step,
- wherein the appearance of the selected devices in an overview converts into a detailed view, as a result of which connections between the devices can be added to and removed from the network.

2. Method according to claim 1,
wherein at least one device (5) displayed in a detailed view (3) is selected by a user and wherein display of the detailed view (3) is deactivated by the user for the devices (5) displayed and selected in the detailed view.

3. Method according to claim 1 or 2, wherein devices (4, 5) are added and/or removed to/from the network by a user.

4. Method according to any one of the preceding claims, wherein connections between devices (4, 5) and to network lines are added and/or removed to/from the network by a user.

5. Method according to any one of the preceding claims, wherein at least one temporary view of the respective device (5) is displayed in a transition phase (2) when the detailed view (3) is activated or deactivated for at least one selected device (5).

6. Method according to claim 5, wherein inputs by the user are ignored during the transition phase (2).

7. Method according to one of the preceding claims, wherein the display of the devices (4, 5) is configured so as to correspond to the real devices with respect to their colouring, shape and/or size relative to each other.

8. Method according to one of the preceding claims, wherein a numerical value is allocated to the devices (4, 5) and the devices (4, 5) are displayed in the overview (1) so as to be given different emphasis as a function of the numerical value.

9. Method according to claim 8, wherein the devices (4, 5) are displayed in the detailed view (3) so as to be given different emphasis as a function of the numerical value.

10. Program, which, if it is run on a system for graphically displaying and engineering at least one network of devices (4, 5) of an automation system which each comprise at least one network interface (7), triggers the system
- to display the at least one network in an overview (1) in which the network is schematically displayed with the devices (4, 5) and network lines, and in which connections between the devices (4, 5) and to the network lines by way of connecting lines, which are provided with a marking (6) at an end connected to a network line, are displayed and
- wherein at least one device (5) can be selected by a user in a first step for display in a detailed view (3),
**characterised in that**
- display of the detailed view (3), in which all network interfaces (7) of the respective device (5) are displayed, can be activated by the user for the selected devices (5) in a second step, wherein the appearance of the selected devices in an overview converts into a detailed view, as a result of which connections between devices can be added to/removed from the network.

11. Program according to claim 10,
wherein at least one device (5) displayed in a detailed view (3) can be selected by a user and wherein display of the detailed view (3) can be deactivated by the user for the devices (5) displayed and selected in the detailed view (3).

12. Program according to claim 10 or 11, wherein devices (4, 5) can be added and removed to/from the network by a user.

13. Program according to one of claims 10 to 12, wherein connections between devices (4, 5) and to network lines can be added and removed to/from the network by a user.

14. Program according to any one of claims 10 to 13, wherein at least one temporary view of the respective device (5) can be displayed in a transition phase (2) when the detailed view (3) is activated or deactivated for at least one selected device (5).

15. Program according to claim 14, wherein inputs by the user are ignored during the transition phase (2).

16. Program according to any one of claims 10 to 15, wherein the display of the devices (4, 5) is configured so as to correspond to the real devices with respect to their colouring, shape and/or size relative to each other.

17. Program according to any one of claims 10 to 16, wherein a numerical value can be allocated to the devices (4, 5) and the devices (4, 5) are displayed in the overview (1) so as to be given different emphasis as a function of the numerical value.

18. Program according to claim 17, wherein the devices (4, 5) can be displayed in the detailed view (3) so as to be given different emphasis as a function of the numerical value.

19. System for graphically displaying and engineering at least one network of devices (4, 5) of an automation system comprising at least one input unit, at least one output unit and means for executing a program according to any one of claims 10 to 18.

## Revendications

1. Procédé de représentation graphique et de projection d'au moins un réseau d'appareils ( 4, 5 ) d'un système d'automatisation qui ont respectivement au moins une interface ( 7 ) de réseau,
- dans lequel on représente le au moins un réseau dans une vue ( 1 ) d'ensemble, dans laquelle le réseau est représenté schématiquement par les appareils ( 4, 5 ) et par des lignes de réseau et dans laquelle on représente des liaisons entre les appareils ( 4, 5 ) entre eux et avec les lignes de réseau par des lignes de liaison, qui sont munies d'un repère ( 6 ) à une extrémité reliée à une ligne de réseau et
- dans lequel dans un premier stade un utilisateur sélectionne au moins un appareil ( 5 ) pour la représentation dans une vue ( 3 ) détaillée,
**caractérisé en ce que**
- dans un deuxième stade, l'utilisateur active pour les appareils ( 5 ) sélectionnés la représentation de la vue ( 3 ) détaillée dans la vue ( 1 ) d'ensemble, dans laquelle toutes les interfaces ( 7 ) de réseau de l'appareil ( 5 ) respectif sont représentées, l'aspect des appareils sélectionnés dans la vue d'ensemble étant transformé en une vue détaillée de manière à pouvoir ajouter au réseau et en enlever des liaisons entre les appareils.

2. Procédé suivant la revendication 1,
dans lequel un utilisateur sélectionne au moins un appareil ( 5 ) représenté en vue ( 3 ) détaillée et dans lequel l'utilisateur désactive, pour les appareils ( 5 ) représentés en vue détaillée et sélectionnés, la représentation de la vue ( 3 ) détaillée.

3. Procédé suivant la revendication 1 ou 2,
dans lequel l'utilisateur ajoute au réseau et/ou en enlève des appareils ( 4, 5 ).

4. Procédé suivant l'une des revendications précédentes,
dans lequel l'utilisateur ajoute au réseau et/ou en enlève des liaisons entre des appareils ( 4, 5 ) entre eux et avec des lignes du réseau.

5. Procédé suivant l'une des revendications précédentes,
dans lequel, lors de l'activation ou de la désactivation de la vue ( 3 ) détaillée, on représente au moins une vue intermédiaire de l'appareil ( 5 ) respectif dans une phase ( 2 ) de transition pour au moins un appareil ( 5 ) sélectionné.

6. Procédé suivant la revendication 5,
dans lequel des entrées par l'utilisateur sont négligées pendant la phase ( 2 ) de transition.

7. Procédé suivant l'une des revendications précédentes,
dans lequel on conforme d'une manière correspondante aux appareils réels la représentation des appareils ( 4, 5 ) en ce qui concerne leur coloration ou leur forme et/ou leurs dimensions relatives.

8. Procédé suivant l'une des revendications précédentes,
dans lequel on affecte aux appareils ( 4, 5 ) un indice de valeur et on représente les appareils ( 4, 5 ) dans la vue ( 1 ) d'ensemble de manière soulignée différemment en fonction de leur indice de valeur.

9. Procédé suivant la revendication 8,
dans lequel on représente les appareils ( 4, 5 ) dans la vue ( 3 ) détaillée de manière soulignée de façon différente en fonction de l'indice de valeur.

10. Programme qui, lorsqu'il est exécuté sur un système de représentation graphique et de projection d'au moins un réseau d'appareils ( 4, 5 ) d'un système d'automatisation qui ont respectivement une interface ( 7 ) de réseau, fait que le système,
- représente le au moins un réseau dans une vue ( 1 ) d'ensemble dans laquelle le réseau est représenté schématiquement avec les appareils ( 4, 5 ) et des lignes de réseau et dans laquelle des liaisons entre les appareils ( 4, 5 ) entre eux et avec les lignes de réseau sont représentées par des lignes de liaison, qui sont munies d'un repère ( 6 ) à une extrémité reliée à une ligne de réseau, et
- dans lequel dans un premier stade un utilisateur peut sélectionner au moins un appareil ( 5 ) pour la représentation dans une vue ( 3 ) détaillée,
**caractérisé en ce que**
- dans un deuxième stade, l'utilisateur peut activer pour les appareils ( 5 ) sélectionnés dans la vue ( 1 ) d'ensemble la représentation de la vue ( 3 ) détaillée, dans laquelle toutes les interfaces ( 7 ) de réseau de l'appareil respectif sont représentées, l'aspect des appareils sélectionnés dans la vue d'ensemble étant transformé en une vue de détail de manière à ce que des liaisons entre les appareils puissent être ajoutées au réseau et en être enlevées.

11. Programme suivant la revendication 10,
dans lequel un utilisateur peut sélectionner au moins un appareil ( 5 ) représenté en vue ( 3 ) détaillée et dans lequel l'utilisateur peut désactiver la représentation de la vue ( 3 ) détaillée pour les appareils ( 5 ) représentés en vue ( 3 ) détaillée est sélectionnée.

12. Programme suivant la revendication 10 ou 11,
dans lequel l'utilisateur peut ajouter au réseau des appareils ( 4, 5 ) et en enlever.

13. Programme suivant l'une des revendications 10 à 12,
dans lequel l'utilisateur peut ajouter au réseau des liaisons entre des appareils ( 4, 5 ) entre eux et à des lignes de réseau et en enlever.

14. Programme suivant l'une des revendications 10 à 13,
dans lequel, lors de l'activation ou de la désactivation de la vue ( 3 ) détaillée pour au moins un appareil ( 5 ) sélectionné, au moins une vue intermédiaire de l'appareil ( 5 ) respective peut être représentée dans une phase de transition.

15. Programme suivant la revendication 14,
dans lequel des entrées par l'utilisateur sont négligées pendant la phase ( 2 ) de transition.

16. Programme suivant l'une des revendications 10 à 15,
dans lequel on conforme d'une manière correspondante aux appareils réels la représentation des appareils ( 4, 5 ) en ce qui concerne leur coloration ou leur forme et/ou leur dimension relative.

17. Programme suivant l'une des revendications 10 à 16,
dans lequel un indice de valeur peut être affecté aux appareils ( 4, 5 ) et les appareils ( 4, 5 ) peuvent être représentés dans la vue ( 1 ) d'ensemble de manière soulignée de façon différente en fonction de l'indice de valeur.

18. Programme suivant la revendication 17,
dans lequel les appareils ( 4, 5 ) peuvent être représentés dans la vue ( 3 ) détaillée d'une manière soulignée de façon différente en fonction de l'indice de valeur.

19. Système de représentation graphique et de projection d'au moins un réseau ( 4, 5 ) d'appareils d'un système d'automatisation, ayant au moins une unité d'entrée, ayant au moins une unité de sortie et ayant des moyens d'exécution d'un programme suivant l'une des revendications 10 à 18.
